# EUROPÄISCHE PATENTSCHRIFT

(11) **EP 1 300 266 B1**
(45) Veröffentlichungstag und Bekanntmachung des Hinweises auf die Patenterteilung: **22.10.2008**
(21) Anmeldenummer: 02018879.3
(22) Anmeldetag: 24.08.2002
(51) Int. Cl.: B60H 1/00, B60H 1/32

(54) **Verfahren zur scheibenbeschlagverhindernden Wärmepumpenleistungsregelung einer Fahrzeug-Klimaanlage**
Heat pump power control method for preventing the misting-up of windows
Procédé de commande de la puissance d'une pompe à chaleur pour prévenir l'embuage des vitres

(30) Priorität: 04.10.2001 DE 10149757
(43) Veröffentlichungstag der Anmeldung: 09.04.2003
(73) Patentinhaber: Behr GmbH & Co. KG, 70469 Stuttgart (DE)
(72) Erfinder: Feuerecker, Günther, Dr. rer. nat., 70567 Stuttgart (DE); Kunberger, Ottokar, Dipl.-Ing.(FH), 70825 Korntal-Münchingen (DE)
(74) Vertreter: Grauel, Andreas

(56) Entgegenhaltungen:
- DE-A- 19 540 566
- DE-C- 19 942 529
- US-A- 4 920 755

## Beschreibung

Die Erfindung bezieht sich auf ein Verfahren zur scheibenbeschlagverhindernden Wärmepumpenleistungsregelung einer wahlweise im Kühlbetriebsmodus und Wärmepumpenmodus betreibbaren Fahrzeug-Klimaanlage, die einen im Kühlbetriebsmodus als Verdampfer zur Luftstromkühlung und im Wärmepumpenmodus als Kondensator/Gaskühler zur Luftstromerwärmung betriebenen Wärmeübertrager aufweist.

Fahrzeug-Klimaanlagen dieser Art, bei denen ein Wärmeübertrager im Kühlbetriebsmodus als Verdampfer und im Wärmepumpenmodus als Kondensator/Gaskühler fungiert, ermöglichen einen kostengünstigen Wärmepumpenbetrieb zusätzlich zum Kühlbetrieb, was zunehmend für Kraftfahrzeuge genutzt wird, die auf möglichst niedrigen Kraftstoffverbrauch ausgelegt sind und bei denen daher die Heizleistung durch die Abwärme des Antriebsmotors für eine komfortable Innenraumbeheizung nicht mehr ausreicht.

Starke Scheibenbeschlagneigung tritt in diesen Klimaanlagen besonders dann auf, wenn wie in der klimatischen Übergangszeit im Frühjahr und Herbst die Klimaanlage abwechselnd zum Kühlen/Entfeuchten und zum Heizen des in den Fahrzeuginnenraum geleiteten Klimatisierungsluftstroms eingesetzt wird. Wenn der im Kühlbetriebsmodus als Verdampfer fungierende Wärmeübertrager von einem vorangegangenen Kühl-/Entfeuchtungsbetrieb noch nass, d.h. mit abgeschiedenem Kondenswasser beladen ist, wird bei beginnendem Wärmepumpenmodus dieses Kondenswasser verdunstet und schlägt sich, wenn keine Gegenmaßnahmen ergriffen werden, an den noch kalten Fahrzeugscheiben nieder, insbesondere auch an der Windschutzscheibe. Als Abhilfe ist es bekannt, den Wärmepumpenbetrieb zur Beheizung des Klimatisierungsluftstroms durch eine Steuerung oder Regelung so zu begrenzen, dass übermäßiger Scheibenbeschlag vermieden wird. Andererseits ist unter Einhaltung dieser Bedingung eine möglichst rasche Aufheizung wünschenswert.

In der Patentschrift US 6.089.034 als nächstliegender Stand der Technik wird hierzu vorgeschlagen, nach Aktivierung des Kühlbetriebsmodus einen Scheibenbeschlagverhinderungs-Merker zu setzen, der jeweils nach Aktivierung des Wärmepumpenmodus abgefragt wird. Wenn bei dieser Abfrage festgestellt wird, dass er gesetzt ist, wird ein leistungsbegrenzter Wärmepumpenbetrieb gestartet, bei dem auf einen Lufttemperatur-Sollwert des Luftstroms nach Austritt aus dem im Kühlbetriebsmodus als Verdampfer und im Wärmepumpenmodus als Kondensator betriebenen Wärmeübertrager geregelt wird, welcher gleich der Summe von Außentemperatur, d.h. der Temperatur des von auβen angesaugten Luftstroms vor Eintritt in den Wärmeübertrager, und einem Offsetwert ist, der nach fest vorgegebenen Zeitintervallen um fest vorgegebene Stufenbeträge angehoben wird.

In der Offenlegungsschrift EP 1 078 788 A2 ist ein Verfahren zur scheibenbeschlagverhindernden Wärmepumpenleistungsregelung der eingangs genannten Art beschrieben, bei dem die Taupunkttemperatur des Luftstroms nach Austritt aus dem im Kühlbetriebsmodus als Verdampfer und im Wärmepumpenmodus als Kondensator/Gaskühler betriebenen Wärmeübertrager durch Messung der Temperatur und der Luftfeuchtigkeit dieses Austritts-Luftstroms mittels entsprechender Sensoren bestimmt wird. Alternativ kann eine direkte Messung der Taupunkttemperatur mittels eines geeigneten Sensors vorgesehen sein. Des weiteren wird die Windschutzscheibentemperatur gemessen oder indirekt aus Messungen der Außentemperatur, der Innenraumtemperatur und der Fahrzeuggeschwindigkeit ermittelt. Der Wärmepumpenbetrieb wird dann auf einen Sollwert der Taupunkttemperatur des Austritts-Luftstroms geregelt, der gleich der Windschutzscheibentemperatur ist. Diese Vorgehensweise benötigt relativ aufwendige Sensorik, insbesondere einen Feuchte- oder Taupunktsensor für die Bestimmung der Taupunkttemperatur des Austritts-Luftstroms und einen Windschutzscheibentemperatursensor. Die alternative indirekte Ermittlung der Windschutzscheibentemperatur anhand von Messwerten für die Außentemperatur, die Innenraumtemperatur und die Fahrzeuggeschwindigkeit ist in ihrer Genauigkeit begrenzt, da der Innenraumtemperatursensor meist nicht genau die Temperatur an der Windschutzscheibeninnenseite liefert und die Interpolation der Scheibentemperatur aus Außentemperatur zuzüglich Fahrzeuggeschwindigkeitseinfluss einerseits und Innenraumtemperatur andererseits nur einen begrenzt genauen Schätzwert liefern kann.

Der Erfindung liegt als technisches Problem die Bereitstellung eines Verfahrens der eingangs genannten Art zugrunde, mit dem sich die Wärmepumpenleistung der Klimaanlage insbesondere in Situationen, in denen der im Wärmepumpenmodus als Kondensator/Gaskühler arbeitende Wärmeübertrager aufgrund seiner Verdampferfunktion in einem vorausgehenden Kühlbetriebsintervall noch nass ist, möglichst optimal so geregelt wird, dass einerseits eine möglichst hohe Wärmepumpenleistung zur raschen Aufheizung des Fahrzeuginnenraums eingestellt, andererseits aber Scheibenbeschlag sicher verhindert wird.

Die Erfindung löst dieses Problem durch die Bereitstellung eines Verfahrens zur scheibenbeschlagverhindernden Wärmepumpenleistungsregelung mit den Merkmalen des Anspruchs 1, 4 oder 5.

Beim Verfahren nach Anspruch 1 wird zur Scheibenbeschlagverhinderung die Wärmepumpenleistung im anfänglichen Wärmepumpenmodus auf einen Lufttemperatur-Sollwert des Austritts-Luftstroms geregelt, der auf einen Wert kleiner als oder gleich groß wie die Summe der ermittelten Außen-Temperatur des Luftstroms und eines Offsetwertes festgelegt wird, welcher in Abhängigkeit von der über den Wärmeübertrager geleiteten Luftmenge variabel vorgegeben wird. Dies berücksichtigt die von der Luftmenge abhängigen Verhältnisse beim Stoff- und Wärmeübergang in den beteiligten Wärmeübertragern sowie die Beschlagneigung der Scheiben, so dass eine maximal mögliche Wärmepumpenleistung bei sonst gleichen übrigen Bedingungen eingestellt und somit die Trocknungszeit für den anfangs nassen Wärmeübertrager verkürzt werden kann.

In einer Weiterbildung dieses Verfahrens nach Anspruch 2 wird der Offsetwert zusätzlich in Abhängigkeit von einem Scheibenerwärmungswert vorgegeben, der die fortschreitende Scheibenerwärmung durch den beheizten Luftstrom berücksichtigt und hierzu als Zeitintegral über einen Scheibenaufwärmleistungsparameter berechnet wird, der in Abhängigkeit vom ermittelten Außen-Temperaturwert, von einem ermittelten Austritts-Temperaturwert des Luftstroms und der Luftmenge bestimmt wird. Die je nach Anwendungsfall und insbesondere Fahrzeugtyp zu wählenden funktionellen Abhängigkeiten können z.B. empirisch ermittelt und als entsprechende Kennlinien bzw. Kennfelder abgelegt werden.

In weiterer Ausgestaltung dieses Verfahrens wird gemäß Anspruch 3 bei bekannter Kondenswasserbeladung des Wärmeübertragers der Scheibenaufwärmleistungsparameter zusätzlich in Abhängigkeit von dieser Kondenswasserbeladung bestimmt. Dies berücksichtigt den Einfluss einer ungleichmäßigen Abtrocknung des Wärmeübertragers.

Das Verfahren nach Anspruch 4 und das Verfahren nach Anspruch 5 eignen sich für Klimaanlagen, bei denen der Austritts-Wassergehalt des Luftstroms nach Austritt aus dem Wärmeübertrager z.B. durch Einsatz eines Luftfeuchtigkeitssensors überwacht werden kann, was eine direkte Kontrolle des Austritts-Wassergehaltes des aus dem beim Wärmeübertrager austretenden Luftstroms ermöglicht.

Gemäß dem Verfahren nach Anspruch 4 wird die Wärmepumpenleistung auf einen Wassergehalt-Sollwert des Luftstroms nach Austritt aus dem Wärmeübertrager geregelt, der auf einen Wert kleiner als oder gleich der Summe eines ermittelten Sättigungs-Wassergehaltswertes des Luftstroms bei Umgebungstemperatur und eines Wassergehalt-Offsetwertes vorgegeben wird, der in Abhängigkeit von der über den Wärmeübertrager geleiteten Luftmenge variabel vorgegeben wird. Dies berücksichtigt wiederum die Verhältnisse beim Stoff- und Wärmeübergang in den beteiligten Wärmeübertragern und die Beschlagneigung der Scheiben. Die genaue funktionelle Abhängigkeit kann z.B. empirisch ermittelt und als Kennlinie abgelegt werden. Die Luftmenge kann für dieses Verfahren ebenso wie für das Verfahren nach den Ansprüchen 1 bis 3 in herkömmlicher Weise z.B. anhand von erfassten Luftgebläse- und Luftklappeneinstellungen sowie der Fahrgeschwindigkeit ermittelt werden.

Beim Verfahren nach Anspruch 5 wird der Wassergehalt-Sollwert auf höchstens einen Wassergehaltswert festgelegt, der die fortschreitende Scheibenerwärmung durch einen Temperatur-Offsetwert nach Art des Verfahrens nach Anspruch 2 berücksichtigt.

Vorteilhafte Ausführungsformen der Erfindung sind in den Zeichnungen dargestellt und werden nachfolgend beschrieben. Hierbei zeigen:
- Fig. 1: ein schematisches Blockdiagramm einer erfindungsgemäß betreibbaren Fahrzeug-Klimaanlage,
- Fig. 2: ein Flussdiagramm eines Verfahrens zur scheibenbeschlagverhindernden Wärmepumpenleistungsregelung auf einen vorgebbaren Lufttemperatur-Sollwert für die Klimaanlage von Fig. 1 und
- Fig. 3: ein Flussdiagramm eines Verfahrens zur scheibenbeschlagverhindernden Wärmepumpenleistungsregelung auf einen vorgebbaren Wassergehalt-Sollwert für die Klimaanlage von Fig. 1.

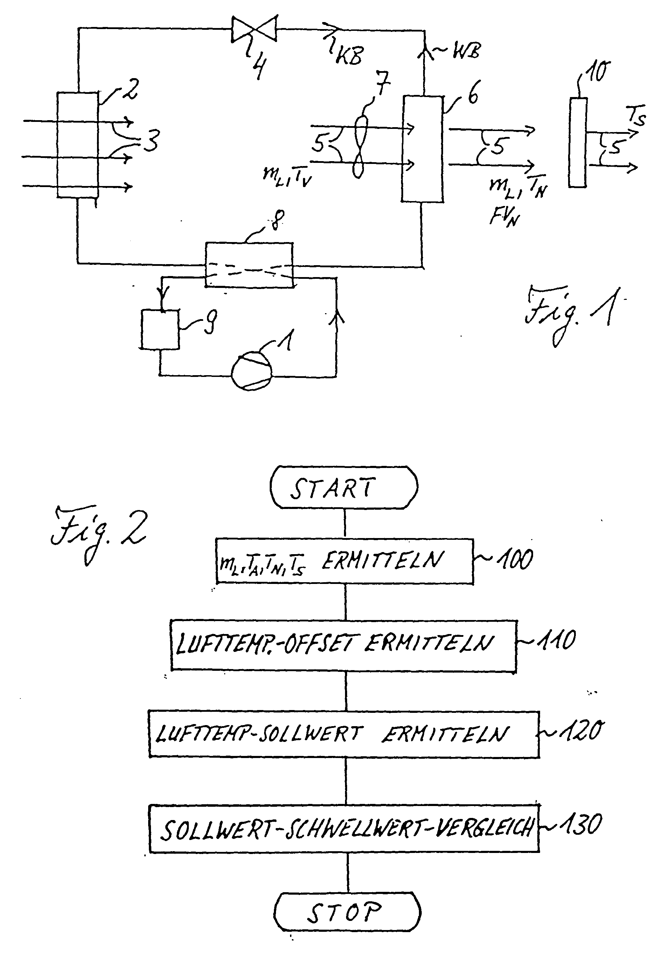

Die in Fig. 1 schematisch gezeigte Fahrzeug-Klimaanlage weist einen mit dem Kältemittel CO₂ oder einem anderen herkömmlichen Kältemittel arbeitenden Kältemittelkreislauf von an sich herkömmlichem Aufbau auf, der so ausgelegt ist, dass die Klimaanlage wahlweise im Kühlbetriebsmodus und im Wärmepumpenmodus betreibbar ist. Die hauptsächlichen Komponenten sind ein Kompressor 1, ein außenliegender, d.h. von einem Außenluftstrom 3 angeströmter Wärmeübertrager 2, ein Expansionselement 4, ein innenliegender, d.h. von einem in einen Fahrzeuginnenraum geleiteten Klimatisierungsluftstrom 5 angeströmter Wärmeübertrager 6 mit zugehörigem Luftfördergebläse 7, ein 4/2-Wegeventil 8 zur Umschaltung der Richtung des Kältemittelstroms beim Wechsel zwischen Kühl- und Wärmepumpenbetrieb, ein Sammler 9 und ein in üblicher, nicht näher gezeigter Weise von einem Motorkühlmittel, z.B. Wasser, durchströmter, luftbeheizender Wärmeübertrager 10.

Im Kühlbetrieb strömt das Kältemittel in der durch einen zugehörigen Pfeil KB angegebenen Richtung, im Wärmepumpenbetrieb in der dazu entgegengesetzten, durch einen zugehörigen Pfeil WB angezeigten Richtung. Der außenliegende Wärmeübertrager 2 fungiert im Kühlbetrieb als Kondensator/Gaskühler und im Wärmepumpenbetrieb als Verdampfer. Umgekehrt fungiert der innenliegende Wärmeübertrager 6 im Kühlbetrieb als Verdampfer und im Wärmepumpenbetrieb als Kondensator/Gaskühler. Somit kühlt er im Kühlbetrieb den ihm im Frischluftbetrieb durch das Luftfördergebläse 7 von außen und im Umluftbetrieb vom Fahrzeuginnenraum zugeführten Luftstrom 5 ab, während er ihn im Wärmepumpenbetrieb erwärmt. Der vom innenliegenden Wärmeübertrager 6 klimatisierte Luftstrom 5 wird über nicht gezeigte, herkömmliche Luftkanäle, Klappen und Austrittsdüsen in den Fahrzeuginnenraum geleitet, wobei er je nach Bedarf und Systemauslegung über weitere Klimatisierungskomponenten geführt werden kann, insbesondere einen Heizkörper.

Im Kühlbetrieb kommt es an dem als Verdampfer arbeitenden, innenliegenden Wärmeübertrager 6 zur bekannten Kondenswasserabscheidung. Da das abgeschiedene Kondenswasser bei einer Umschaltung in den Wärmepumpenmodus durch die Aufheizung des innenliegenden Wärmeübertragers 6 in den darüber geführten Luftstrom 5 verdunstet, tritt unter ungünstigen Bedingungen Scheibenbeschlagneigung auf, indem sich das vom Luftstrom aufgenommene Wasser an der Innenseite insbesondere der Windschutzscheibe des Fahrzeugs niederschlägt. Daher ist es wünschenswert, die Wärmepumpenleistung so weit zu begrenzen, dass kein Scheibenbeschlag auftritt, sie andererseits aber möglichst hoch zu halten, um eine rasche Aufheizung des Fahrzeuginnenraums zu bewirken. Dies lässt sich mit relativ einfachen Mitteln unter Einsatz der nachfolgend näher erläuterten Vorgehensweisen erreichen.

Fig. 2 veranschaulicht hierbei eine Verfahrensvariante, die ohne Überwachung der Luftfeuchtigkeit bzw. des Wassergehaltes des Klimatisierungsluftstroms 5 nach Austritt aus dem Wärmeübertrager 6 auskommt. Bei diesem Verfahren wird die Wärmepumpenleistung im anfänglichen Wärmepumpenbetrieb bei noch nassem Wärmeübertrager 6 durch Regelung auf einen speziell ermittelten Lufttemperatur-Sollwert TNₛₒₗₗ des Luftstroms 5 nach Austritt aus dem Wärmeübertrager 6 begrenzt.

Wie aus dem zugehörigen Flussdiagramm von Fig. 2 ersichtlich, wird hierfür zunächst die über den Wärmeübertrager 6 geleitete Luftmenge m_{L} ermittelt. Dies geschieht in einer herkömmlichen und daher hier nicht näher zu beschreibenden Weise anhand von hierzu erfassten Informationen über die Gebläsestufe des Luftfördergebläses 7, die Klappenstellungen der luftmengenbeeinflussenden Luftklappen und die Fahrgeschwindigkeit. Des weiteren werden der Wert der Außentemperatur T_{A} und die Temperaturwerte T_{N} und T_{S} für den Luftstrom vor Eintritt in bzw. nach Austritt aus dem vom Motorkühlmittel durchströmten Wärmeübertrager 10 z.B. direkt durch entsprechende Temperatursensoren ermittelt.

Anschließend wird ein Lufttemperatur-Offsetwert T_{O} ermittelt (Schritt 110). In einer einfachen Realisierung wird dieser Offsetwert T_{O} allein in Abhängigkeit von der ermittelten Luftmenge m_{L} bestimmt, wobei die funktionelle Abhängigkeit vorab empirisch durch Versuche und Auswahl der entsprechenden fahrzeugspezifischen Funktion ermittelt und als entsprechende Kennlinie abgelegt wird. Schon diese in Abhängigkeit von der Luftmenge m_{L} variable Vorgabe des Lufttemperatur-Offsetwertes T_{O} ermöglicht gegenüber der Vorgabe eines konstant bleibenden Lufttemperatur-Offsetwertes und umso mehr gegenüber einem Verfahren, bei dem der Lufttemperatur-Sollwert ohne Offsetwert auf höchstens die Außentemperatur gesetzt wird, eine erhöhte Wärmepumpenleistung und damit eine verkürzte Trocknungszeit für den Wärmeübertrager ohne Scheibenbeschlaggefahr.

Diese Vorgehensweise berücksichtigt noch nicht den Effekt, dass sich die Scheiben durch den Wärmepumpenbetrieb allmählich aufwärmen. In einer in dieser Hinsicht verbesserten Verfahrensvariante wird daher der Lufttemperatur-Offsetwert Tₒ zusätzlich in Abhängigkeit von einem Scheibenerwärmungswert Sₑ vorgegeben, der den Effekt der fortschreitenden Scheibenerwärmung beschreibt. Dieser Scheibenerwärmungswert wird als Zeitintegral über einen Scheibenaufwärmleistungsparameter berechnet, der die vom Klimatisierungsluftstrom an die Scheiben gebrachte Aufwärmleistung ausdrückt, die sich als Funktion des ermittelten Außen-Temperaturwertes T_{A}, des ermittelten Austritts-Temperaturwertes T_{S} und der ermittelten Luftmenge m_{L} des Klimatisierungsluftstroms und gegebenenfalls der die Luftführung zu den Scheiben bestimmenden Klappenstellungen ermitteln lässt. Mit anderen Worten lässt sich der Scheibenaufwärmleistungsparameter S_{I} als Funktion f(T_{A}, T_{S}, m_{I}, Klappenstellung, t) von Außen-Temperatur T_{A}, Austritts-Temperatur T_{S}, Luftmenge m_{L}, Klappenstellungen und der Zeit t ausdrücken, wobei die Funktion f wiederum vorzugsweise empirisch für den jeweiligen Fahrzeugtyp ermittelt und als Kennfeld abgelegt wird. Der Lufttemperatur-Offsetwert Tₒ ist dann eine Funktion Tₒ(m_{L},Sₑ) der ermittelten Luftmenge m_{L} und des ermittelten Scheibenerwärmungswertes Sₑ, der das Zeitintegral über den Scheibenaufwärmleistungsparameter S_{I} darstellt.

Nach der Ermittlung des Lufttemperatur-Offsetwertes T_{O} auf eine der beiden erläuterten Arten wird dann der Lufttemperatur-Sollwert TNₛₒₗₗ für die scheibenbeschlagverhindernde Wärmepumpenleistungsregelung auf einen Wert festgesetzt, der gleich der Summe des ermittelten Außen-Temperaturwertes T_{A} und des ermittelten Lufttemperatur-Offsetwertes T_{O} oder nur wenig niedriger ist, d.h. TNₛₒₗₗ ≤T_{A}+T_{O}. Mit anderen Worten stellt die Summe aus Außen-Temperaturwert T_{A} und Offsetwert T_{O} eine vom Lufttemperatur-Sollwert TNₛₒₗₗ anzustrebende obere Grenze zur Einstellung einer größtmöglichen Wärmepumpenleistung bei noch sicher unterdrückter Scheibenbeschlagneigung dar.

Bei der Variante mit Berücksichtigung der allmählichen Scheibenerwärmung steigt mit der Zeit der Lufttemperatur-Offsetwert und damit der Lufttemperatur-Sollwert entsprechend an. In diesem Fall wird der Lufttemperatur-Sollwert mit einem geeignet vorgebbaren Schwellwert verglichen (Schritt 130). Der Schwellwert ist so gewählt, dass eine Überschreitung durch den Lufttemperatur-Sollwert die Schlussfolgerung zulässt, dass der Wärmeübertrager getrocknet ist, so dass ab diesem Zeitpunkt der Wärmepumpenbetrieb ohne Leistungsbegrenzung fortgeführt werden kann.

Wenn die Kondenswasserbeladung des Wärmeübertragers 6 bekannt ist (geeignete Abschätzverfahren sind z.B. in einer parallelen deutschen Patentanmeldung DE 101 42 740 A1 der Anmelderin beschrieben, worauf verwiesen werden kann), so kann diese Information zur weiteren Optimierung der Wärmepumpenleistungsregelung dienen. Dazu wird der Scheibenaufwärmleistungsparameter S_{I} in diesem Fall zusätzlich in Abhängigkeit von der momentanen Kondenswasserbeladung des Wärmeübertragers 6 ermittelt, wobei auch diese Abhängigkeit wiederum bevorzugt empirisch vorab durch Versuche bestimmt und im Kennfeld für den Scheibenaufwärmleistungsparameter S_{I} abgelegt wird. Die Kondenswasserbeladung kann durch eine Abschätzung der verdunsteten Wassermenge aktualisiert werden. Die Abschätzung der verdunsteten Wassermenge ist anhand der Differenz eines ermittelten Eintritts-Wassergehaltes des Luftstroms 5 vor Eintritt in den Wärmeübertrager 6 und eines ermittelten Austritts-Wassergehaltes desselben nach Austritt aus dem Wärmeübertrager 6 möglich (wie in der erwähnten parallelen deutschen Patentanmeldung DE 101 42 740 A1 der Anmelderin näher beschrieben).

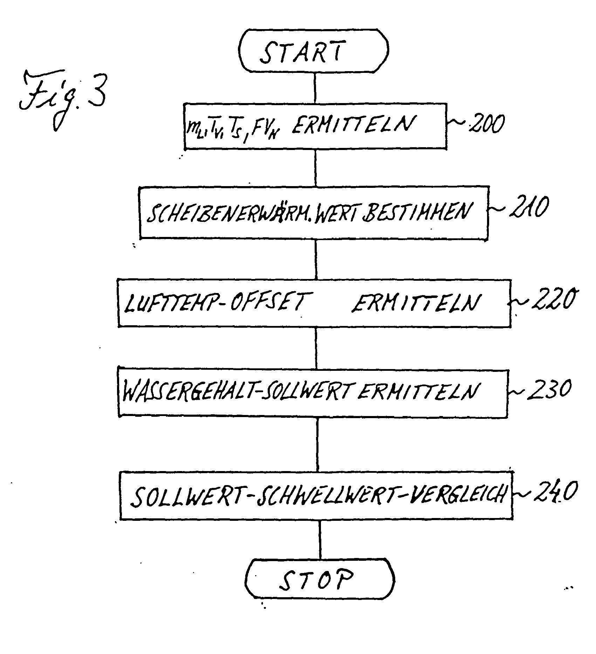

Für Klimaanlagen, die Mittel zur Erfassung der Luftfeuchtigkeit bzw. des Wassergehaltes des Klimatisierungsluftstroms 5 nach Austritt aus dem Wärmeübertrager 6 aufweisen, kann der Feuchtegehalt der an die Scheiben strömenden Luft direkt über eine geeignete Einregelung des Austritts-Wassergehaltes des Luftstroms kontrolliert werden, so dass eine sehr rasche, optimale Trocknung des Wärmeübertragers 6 möglich ist, ohne dass die Beschränkung der Austritts-Lufttemperatur der zu Fig. 2 beschriebenen Verfahrensvariante nötig ist. In diesem Fall kann ein Verfahren benutzt werden, bei dem die Wärmepumpenleistung scheibenbeschlagverhindernd auf einen Wassergehalt-Sollwert FNₛₒₗₗ des Klimatisierungsluftstroms 5 nach Austritt aus dem Wärmeübertrager 6 geregelt wird und das nachfolgend unter Bezugnahme auf Fig. 3 erläutert wird.

Wie aus Fig. 3 ersichtlich, werden zunächst wieder die benötigten Eingangsgrößen dieses Verfahrens ermittelt, speziell die über den Wärmeübertrager 6 geführte Luftmenge m_{L}, die Außen-Lufttemperatur T_{V} und die Austritts-Lufttemperatur T_{S} des Luftstroms nach Austritt aus dem kühlmitteldurchströmten Wärmeübertrager 10 sowie der Wassergehalt FV_{N} beim Austritt aus dem innenliegenden, kältemitteldurchströmten Wärmeübertrager 6 (Schritt 200). Die Ermittlung dieser Größen erfolgt wie im entsprechenden Schritt 100 beim Verfahren von Fig. 2, worauf verwiesen werden kann.

In einer einfachen, nicht dargestellten Verfahrensvariante wird anschließend der Wassergehalt-Sollwert FNₛₒₗₗ gleich groß wie oder geringfügig kleiner als ein Wert festgelegt, der gleich der Summe aus einem Eintritts-Wassergehaltsättigungswert FV_{S} und einem Wassergehalt-Offsetwert FN_{O} ist, d.h. diese Summe stellt eine obere Grenze dar, an welche der Wassergehalt-Sollwert FNₛₒₗₗ möglichst nahe angenähert wird, um eine hohe Wärmepumpenleistung bei gleichzeitig unterdrückter Scheibenbeschlagneigung zu erhalten. Der Wassergehalt-Offsetwert FN_{O} wird in Abhängigkeit von der Luftmenge m_{L} variabel gewählt, wobei die zugehörige funktionelle Abhängigkeit wiederum bevorzugt empirisch durch Versuche vorab festgestellt und als entsprechende Kennlinie abgelegt wird. Der Eintritts-Wassergehaltsättigungswert FV_{S} bezeichnet den Wassergehalt der Luft bei der gegebenen Außen-Temperatur T_{A} und einer angenommenen maximalen relativen Sättigungsluftfeuchte von 100%.

Eine noch genauer arbeitende Verfahrensvariante berücksichtigt den Effekt der fortschreitenden Scheibenerwärmung. Dazu wird analog zur entsprechenden Verfahrensvariante der Lufttemperatur-Offsetwertermittlung im Schritt 110 von Fig. 2 der die Scheibenerwärmung repräsentierende Scheibenerwärmungswert Sₑ als Zeitintegral über den Scheibenaufwärmleistungsparameter S_{I} berechnet, der die vom Klimatisierungsluftstrom 5 auf die Scheiben gebrachte Aufheizleistung beschreibt und in Abhängigkeit von der Außen-Lufttemperatur T_{A}, der Austritts-Lufttemperatur T_{S}, der Luftmenge m_{L}, den relevanten Klappenstellungen und der Zeit t bestimmt wird, bevorzugt wiederum anhand von Kennfeldern, die empirisch vorab durch Versuche fahrzeugspezifisch gewonnen werden (Schritt 210). Daraus wird wie zum Schritt 110 von Fig. 2 beschrieben ein Lufttemperatur-Offsetwert T_{O} als kennfeldbasiert vorgegebene Funktion der Luftmenge m_{L} und des Scheibenerwärmungswertes Sₑ ermittelt (Schritt 220).

Der erhaltene Lufttemperatur-Offsetwert T_{O} wird zum Außen-Temperaturwert T_{A} addiert, und dann wird der Sättigungs-Wassergehaltswert FV_{S}(T_{A}+T_{O}) bestimmt, der den Wassergehalt des Klimatisierungsluftstroms bei dieser Summentemperatur T_{A}+T_{O} im Fall von 100% relativer Luftfeuchtigkeit angibt. Der Wassergehalt-Sollwert FNₛₒₗₗ des Klimatisierungsluftstroms 5 nach Austritt aus dem Wärmeübertrager 6 wird dann für die scheibenbeschlagverhindernde Wärmepumpenleistungsregelung auf diesen ermittelten Sättigungs-Wassergehaltswert FV_{S}(T_{A}+T_{O}) oder einen knapp darunter liegenden Wert festgelegt (Schritt 230). Dies ermöglicht die Einstellung einer möglichst hohen Wärmepumpenleistung ohne Scheibenbeschlag durch das vom Wärmeübertrager 6 in den Luftstrom 5 verdunstende Kondenswasser.

Nimmt trotz steigender Heizleistung der Wassergehalt FV_{N} nicht weiter zu, so ist der Wärmeübertrager 6 getrocknet, und der Wärmepumpenbetrieb kann ab diesem Zeitpunkt ohne Leistungsbegrenzung weitergeführt werden (Schritt 240).

Bei allen oben erläuterten Verfahrensvarianten der Fig. 2 und 3 beeinflusst der Einsatz einer elektrischen Scheibenheizung direkt die Scheibentemperatur und erlaubt gegebenenfalls ein wesentlich schnelleres Hochfahren der Wärmepumpenleistung. Dies kann in den einzelnen Verfahrensvarianten im betreffenden Kennfeld berücksichtigt werden.

Eine weitere Modifikation ergibt sich, wenn zusätzliche Fahrzeuginnenraum-Beheizungsmittel eingesetzt werden, insbesondere solche, die den zu den Scheiben geführten Klimatisierungsluftstrom heizen, wie beispielsweise ein herkömmlicher, im Klimatisierungsgehäuse der Klimaanlage eingebauter PTC-Heizkörper. Dies ist bei der Berechnung des Scheibenerwärmungswertes zu berücksichtigen.

Wie die oben angegebenen Ausführungsbeispiele deutlich machen, erlaubt das erfindungsgemäße Verfahren eine vergleichsweise optimale Wärmepumpenleistungsregelung im anfänglichen Wärmepumpenbetrieb bei noch nassem, im Kühlbetrieb als Verdampfer fungierendem und im Wärmepumpenbetrieb als Kondensator/Gaskühler fungierendem Wärmeübertrager mit relativ einfachen, bereits in herkömmlichen Klimaanlagen vorhandenen Mitteln derart, dass die Wärmepumpenleistung möglichst nur so stark begrenzt wird, dass Scheibenbeschlag gerade noch sicher verhindert wird, wobei verschiedene Verfahrensrealisierungen mit abgestufter Komplexität und Regelungsgenauigkeit möglich sind.

## Patentansprüche

1. Verfahren zur scheibenbeschlagverhindernden Wärmepumpenleistungsregelung einer wahlweise im Kühlbetriebsmodus und Wärmepumpenmodus betreibbaren Fahrzeug-Klimaanlage, die einen im Kühlbetriebsmodus als Verdampfer zur Luftstromkühlung und im Wärmepumpenmodus als Kondensator/Gaskühler zur Luftstromerwärmung betriebenen Wärmeübertrager (6) aufweist, wobei
bei einsetzendem Wärmepumpenbetrieb und aufgrund eines vorhergehenden Kühlbetriebs noch nassem Wärmeübertrager (6) auf einen vorgebbaren Lufttemperatur-Sollwert (TNₛₒₗₗ) des Luftstroms (5) nach Austritt aus dem Wärmeübertrager (6) geregelt wird, der auf einen Wert gleich groß wie oder kleiner als die Summe (T_{A}+T_{O}) eines ermittelten Außen-Temperaturwertes (T_{A}) des Luftstroms vor Eintritt in den Wärmeübertrager und eines Lufttemperatur-Offsetwertes (T_{O}) festgesetzt wird,
**dadurch gekennzeichnet dass**
der Lufttemperatur-Offsetwert (T_{O}) in Abhängigkeit von einem ermittelten Luftmengenwert (m_{L}) des über den Wärmeübertrager geleiteten Luftstroms variabel vorgegeben wird.

2. Verfahren nach Anspruch 1, weiter **dadurch gekennzeichnet, dass** der Lufttemperatur-Offsetwert (T_{O}) zusätzlich in Abhängigkeit von einem die fortschreitende Scheibenerwärmung repräsentierenden Scheibenerwärmungswert (Sₑ) vorgegeben wird, der als Zeitintegral über einen Scheibenaufwärmleistungsparameter (S_{I}) berechnet wird, welcher in Abhängigkeit vom ermittelten Außen-Temperaturwert (T_{A}), einem ermittelten Austritts-Temperaturwert (T_{S}) des Luftstroms und der ermittelten Luftmenge (m_{L}) bestimmt wird.

3. Verfahren nach Anspruch 2, weiter **dadurch gekennzeichnet, dass** der Scheibenaufwärmleistungsparameter (S_{I}) zusätzlich in Abhängigkeit von einem ermittelten Kondenswasserbeladungswert bestimmt wird, der die Menge an am Wärmeübertrager kondensiertem Wasser beschreibt.

4. Verfahren zur scheibenbeschlagverhindernden Wärmepumpenleistungsregelung einer wahlweise im Kühlbetriebsmodus und Wärmepumpenmodus betreibbaren Fahrzeug-Klimaanlage, die einen im Kühlbetriebsmodus als Verdampfer zur Luftstromkühlung und im Wärmepumpenmodus als Kondensator/Gaskühler zur Luftstromerwärmung betriebenen Wärmeübertrager (6) aufweist,
**dadurch gekennzeichnet, dass**
bei einsetzendem Wärmepumpenbetrieb und aufgrund eines vorhergehenden Kühlbetriebs noch nassem Wärmeübertrager (6) auf einen Wassergehalt-Sollwert (FNₛₒₗₗ) des Luftstroms (5) nach Austritt aus dem Wärmeübertrager geregelt wird, der auf einen Wert gleich groß wie oder kleiner als die Summe (FV_{S}+FN_{O}) eines Wassergehaltswertes (FV_{S}(T_{A})), welcher den Wassergehalt des Luftstroms bei einem ermittelten Außen-Temperaturwert (T_{A}) des Luftstroms vor Eintritt in den Wärmeübertrager bei maximaler relativer Luftfeuchtigkeit angibt, und eines Wassergehalt-Offsetwertes (FN_{O}(m_{L})) festgesetzt wird, **dadurch gekennzeichnet dass**
der Wassergehalt-Offsetwert (FN_{O}(m_{L})) in Abhängigkeit von einem ermittelten Luftmengenwert (m_{L}) des über den Wärmeübertrager geleiteten Luftstroms variabel vorgegeben wird.

5. Verfahren zur scheibenbeschlagverhindernden Wärmepumpenleistungsregelung einer wahlweise im Kühlbetriebsmodus und Wärmepumpenmodus betreibbaren Fahrzeug-Klimaanlage, die einen im Kühlbetriebsmodus als Verdampfer zur Luftstromkühlung und im Wärmepumpenmodus als Kondensator/Gaskühler zur Luftstromerwärmung betriebenen Wärmeübertrager (6) aufweist,
**dadurch gekennzeichnet, dass**
bei einsetzendem Wärmepumpenbetrieb und aufgrund eines vorhergehenden Kühlbetriebs noch nassem Wärmeübertrager (6) auf einen Wassergehalt-Sollwert (FNₛₒₗₗ) des Luftstroms (5) nach Austritt aus dem Wärmeübertrager geregelt wird, der gleich groß wie oder kleiner als ein ermittelter Wassergehaltswert (FV_{S}(T_{A}+T_{O})) festgesetzt wird, welcher den Wassergehalt des Luftstroms bei maximaler relativer Luftfeuchte und einer Temperatur angibt, die gleich der Summe des ermittelten Temperaturwertes (T_{A}) der Außenluft und eines Lufttemperatur-Offsetwertes (T_{O}) ist, **dadurch gekennzeichnet dass**
der Lufttemperatur-Offsetwert (T_{O}) in Abhängigkeit von einem ermittelten Luftmengenwert (m_{L}) des über den Wärmeübertrager geleiteten Luftstroms und von einem eine fortschreitende Scheibenerwärmung repräsentierenden Scheibenerwärmungswert (Sₑ) variabel vorgegeben wird, der als Zeitintegral über einen Scheibenaufwärmleistungsparameter (S_{I}) berechnet wird, welcher in Abhängigkeit vom ermittelten Außen-Temperaturwert (T_{A}), einem ermittelten Austritts-Temperaturwert (T_{S}) des Luftstroms und der ermittelten Luftmenge (m_{L}) bestimmt wird.

## Claims

1. Heat pump power control method for preventing the masting-up of windows for a motor vehicle air conditioning system which can be operated in both cooling mode and heat pump mode and having a heat exchanger (6) which is operated as an evaporator for air flow cooling in cooling mode and as a condenser/gas cooler for air flow heating in heat pump mode, during operation in heat pump mode and due to a preceding cooling mode phase the still wet heat exchanger (6) being set to a predetermined air temperature reference value (TNₛₒₗₗ) of the air flow (5) after leaving the heat exchanger (6) which is fixed at a value equal to or less than the sum (T_{A}+T_{O}) of a measured external temperature value (T_{A}) of the air flow prior to entering the heat exchanger and an air temperature offset value (T_{O}),
**characterised in that**
the air temperature offset value (To) is predetermined variably dependent on a measured air volume value (m_{L}) of the air flow guided via the heat exchanger.

2. Method in accordance with claim 1,
**further characterised in that**
the air temperature offset value (To) is also predetermined dependent on a window heating value (S_{c}) representing the progressive heating up of the window which is calculated as a time integral over a window heating power parameter (Sᵢ) which is determined dependent on the measured external temperature value (T_{A}), a measured exit temperature value (T_{S}) of the air flow and the measured air volume (m_{L}).

3. Method in accordance with claim 2,
**further characterised in that**
the window heating power parameter (Sᵢ) is also determined dependent on a measured condensation water load value which describes the volume of water condensed on the heat exchanger.

4. Heat pump power control method for preventing the misting-up of windows for a motor vehicle air conditioning system which can be operated in both cooling mode and heat pump mode having a heat exchanger (6) which is operated as an evaporator for air flow cooling in cooling mode and as a condenser/gas cooler for air flow heating in heat pump mode, during operation in heat pump mode and due to a preceding cooling mode phase the still wet heat exchanger (6) being set to a water content reference value (FNₛₒₗₗ) of the air flow (5) after leaving the heat exchanger which is fixed at a value equal to or less than the sum (FV_{S}+FN_{O}) of a water content value (FV_{S}(T_{A})) which indicates the water content of the air flow at a measured external temperature (T_{A}) of the air flow prior to entering the heat exchanger at maximum relative humidity and a water content offset value (FN_{O}(m_{L})),
**characterised in that**
the water content offset value (FN_{O}(m_{L})) is predetermined variably dependent on a calculated air volume value (m_{L}) of the air flow guided via the heat exchanger.

5. Heat pump power control method for preventing the misting-up of windows for a motor vehicle air conditioning system which can be operated in both cooling mode and heat pump mode having a heat exchanger (6) which is operated as an evaporator for air flow cooling in cooling mode and as a condenser/gas cooler for air flow heating in heat pump mode, during operation in heat pump mode and due to a preceding cooling mode phase the still wet heat exchanger (6) being set to a water content reference value (FNₛₒₗₗ) of the air flow (5) after leaving the heat exchanger which is fixed at a value equal to or less than a measured water content value (FV_{S}+(T_{A}+T_{O})) which indicates the water content of the air flow at maximum relative humidity and a temperature which is equal to the sum of the measured temperature value (T_{A}) of the external air flow and an air temperature offset value (T_{O}),
**characterised in that**
the air temperature offset value (To) is predetermined variably dependent on a measured air volume value (m_{L}) of the air flow guided via the heat exchanger and on a window heating value (Sₑ) representing a progressive heating up of the window which is calculated as a time integral over a window heating power parameter (Sᵢ) which is determined dependent on the measured external temperature value (T_{A}), a measured exit temperature value (T_{S}) of the air flow and the measured air volume (m_{L}).

## Revendications

1. Procédé de régulation de la puissance d'une pompe à chaleur - empêchant la formation de buée sur les vitres - d'un système de climatisation d'un véhicule pouvant être actionné, au choix, suivant le fonctionnement en mode refroidissement et en mode pompe à chaleur, système de climatisation qui présente un échangeur de chaleur (6) fonctionnant comme évaporateur pour le refroidissement du flux d'air au cours du fonctionnement en mode refroidissement, et un échangeur de chaleur fonctionnant comme condenseur / refroidisseur des gaz pour le réchauffement du flux d'air au cours du fonctionnement en mode pompe à chaleur, où, lors de la mise en oeuvre du fonctionnement de la pompe à chaleur et, en raison d'un fonctionnement antérieur en mode refroidissement, l'échangeur de chaleur (6) étant encore humide, on procède au réglage sur une valeur théorique de la température de l'air (TN_{théorique}), prédéfinissable, du flux d'air (5), en aval de la sortie de l'échangeur de chaleur (6), valeur théorique qui est fixée sur une valeur de même grandeur ou plus petite que la somme (T_{A} + T_{O}) d'une valeur de la température extérieure (T_{A}), déterminée, du flux d'air en amont de l'entrée de l'échangeur de chaleur, et d'une valeur de décalage de la température de l'air (T_{O}),
**caractérisé en ce que** la valeur de décalage de la température de l'air (T_{O}) est prédéfinie de façon variable, en fonction d'une valeur de débit d'air (m_{L}), déterminée, du flux d'air dirigé à travers l'échangeur de chaleur.

2. Procédé selon la revendication 1, **caractérisé en outre en ce que** la valeur de décalage de la température de l'air (T_{O}) est prédéfinie en outre en fonction d'une valeur de réchauffement des vitres (Sₑ) représentant le réchauffement progressif des vitres, valeur de réchauffement des vitres qui est calculée comme intégrale de temps, par un paramètre de puissance de réchauffement des vitres (Sₗ) qui est déterminé en fonction de la valeur de la température extérieure déterminée (T_{A}), d'une valeur de température de sortie (T_{S}), déterminée, du flux d'air et du débit d'air déterminé (m_{L}).

3. Procédé selon la revendication 2, **caractérisé en outre en ce que** le paramètre de puissance de réchauffement des vitres (Sₗ) est déterminé en outre en fonction d'une valeur de charge d'eau de condensation déterminée qui décrit la quantité d'eau condensée au niveau de l'échangeur de chaleur.

4. Procédé de régulation de la puissance d'une pompe à chaleur - empêchant la formation de buée sur les vitres - d'un système de climatisation d'un véhicule pouvant être actionné, au choix, suivant le fonctionnement en mode refroidissement et en mode pompe à chaleur, système de climatisation qui présente un échangeur de chaleur (6) fonctionnant comme évaporateur pour le refroidissement du flux d'air au cours du fonctionnement en mode refroidissement, et un échangeur de chaleur fonctionnant comme condenseur / refroidisseur des gaz pour le réchauffement du flux d'air au cours du fonctionnement en mode pompe à chaleur,
**caractérisé en ce que,** lors de la mise en oeuvre du fonctionnement en mode pompe à chaleur et, en raison d'un fonctionnement antérieur en mode refroidissement, l'échangeur de chaleur (6) étant encore humide, on procède au réglage sur une valeur théorique de la teneur en eau (FN_{théorique}) du flux d'air (5), en aval de la sortie de l'échangeur de chaleur, valeur théorique qui est fixée sur une valeur de même grandeur ou plus petite que la somme (FV_{S} + FN_{O}) d'une valeur de la teneur en eau (FV_{S}(T_{A})) qui, en cas d'humidité relative maximum de l'air, indique la teneur en eau du flux d'air concernant une valeur de la température extérieure (T_{A}), déterminée, du flux d'air en amont de l'entrée de l'échangeur de chaleur, et d'une valeur de décalage de la teneur en eau (FN_{O}(m_{L})),
**caractérisé en ce que** la valeur de décalage de la teneur en eau (FN_{O}(m_{L})) est prédéfinie de façon variable, en fonction d'une valeur de débit d'air (m_{L}), déterminée, du flux d'air dirigé à travers l'échangeur de chaleur.

5. Procédé de régulation de la puissance d'une pompe à chaleur - empêchant la formation de buée sur les vitres - d'un système de climatisation d'un véhicule pouvant être actionné, au choix, suivant le fonctionnement en mode refroidissement et en mode pompe à chaleur, système de climatisation qui présente un échangeur de chaleur (6) fonctionnant comme évaporateur pour le refroidissement du flux d'air au cours du fonctionnement en mode refroidissement, et un échangeur de chaleur fonctionnant comme condenseur / refroidisseur des gaz pour le réchauffement du flux d'air au cours du fonctionnement en mode pompe à chaleur,
**caractérisé en ce que,** au cours de la mise en oeuvre du fonctionnement de la pompe à chaleur et, en raison d'un fonctionnement antérieur en mode refroidissement, l'échangeur de chaleur (6) étant encore humide, on procède au réglage sur une valeur théorique de la teneur en eau (FN_{théorique}) du flux d'air (5), en aval de la sortie de l'échangeur de chaleur, valeur théorique qui est fixée en étant de même grandeur ou plus petite qu'une valeur de la teneur en eau déterminée (FV_{S}(T_{A} + T_{O})) qui, en cas d'humidité relative maximum de l'air, indique la teneur en eau du flux d'air et une température qui est égale à la somme de la valeur de température (T_{A}), déterminée, de l'air extérieur, et d'une valeur de décalage de la température de l'air (T_{O}),
**caractérisé en ce que** la valeur de décalage de la température de l'air (T_{O}) est prédéfinie de façon variable, en fonction d'une valeur de débit d'air (m_{L}), déterminée, du flux d'air dirigé à travers l'échangeur de chaleur, et d'une valeur de réchauffement des vitres (Sₑ) représentant un réchauffement progressif des vitres, valeur de réchauffement des vitres qui est calculée, comme intégrale de temps, par un paramètre de puissance de réchauffement des vitres (Sₗ) qui est déterminé en fonction de la valeur de la température extérieure déterminée (T_{A}), d'une valeur de température de sortie (T_{S}), déterminée, du flux d'air, et du débit d'air déterminé (m_{L}).
